# EUROPEAN PATENT APPLICATION

(11) **EP 4 496 038 A1**
(43) Date of publication of application: **22.01.2025**
(21) Application number: 23771048.8
(22) Date of filing: 13.03.2023
(51) Int. Cl.: H01M 4/62, H01M 10/052, C08L 29/04, C08L 39/02, C08L 33/02, C08L 53/00, C08F 220/06, C08F 220/14, C08F 220/18

(54) **BINDER INCLUDING COPOLYMER COMPOSITION, ANODE FOR SECONDARY BATTERY INCLUDING SAME BINDER, AND SECONDARY BATTERY INCLUDING SAME ANODE**

(30) Priority: 15.03.2022 KR 20220031922
(71) Applicant: Hansol Chemical Co., Ltd, Seoul 06169 (KR)
(72) Inventor: PARK, So-Hyun, Wanju-gun, Jeollabuk-do 55321 (KR); KWON, Se-Man, Wanju-gun, Jeollabuk-do 55321 (KR); KIM, Chang-Beom, Wanju-gun, Jeollabuk-do 55321 (KR); PARK, Ji-Hye, Wanju-gun, Jeollabuk-do 55321 (KR); PARK, Chan-Su, Wanju-gun, Jeollabuk-do 55321 (KR); GWON, Hyeon-Ji, Wanju-gun, Jeollabuk-do 55321 (KR); KIM, Gyun-Tae, Wanju-gun, Jeollabuk-do 55321 (KR)
(74) Representative: Cabinet Laurent & Charras
(86) International application number: PCT/KR2023/003357
(87) International publication number: WO 2023/177169

(57) **Abstract**

The present invention relates to: a copolymer composition comprising a first copolymer including a vinyl alcohol monomer unit and a vinyl amine monomer unit and a second copolymer including a vinyl alcohol monomer unit and an acrylate monomer unit; and to an anode slurry, an anode, and a secondary battery, including the copolymer composition.

## Description

### Technical Field

The present disclosure relates to a copolymer composition usable as a binder, a slurry including the same, an electrode, and a secondary battery.

### Background Art

With high energy density, lithium secondary batteries are being used extensively in the electrical, electronic, telecommunication, and computer industries. Additionally, application fields of lithium secondary batteries are being expanded to high-capacity secondary batteries for hybrid vehicles, electric vehicles, and the like, in addition to small lithium secondary batteries for portable electronic devices.

As the application field thereof expands, lithium secondary batteries are required to have longer cycle life characteristics as well as higher capacity. One example of a method for increasing the capacity of lithium secondary batteries may involve using silicon atom-containing active materials in an anode.

When applying such silicon atom-containing active materials enabling intercalation and deintercalation of a larger amount of lithium, improvement in battery capacity can be expected compared to when applying existing carbon-based active materials. However, volume changes involved in lithium intercalation and deintercalation are considerable in silicon-containing active materials, causing an anode active material layer to expand and contract significantly during charging and discharging.

As a result, there has been a problem with deterioration in the cycle characteristics of secondary batteries, meaning that the conductivity between the anode active materials is reduced, or the conductive path between the anode active material and a current collector is blocked.

However, various binders currently developed (such as PAA, PAA/CMC, Na-PAA, crosslinked PAA, Alginate, and PVA) lack durability due to insufficient adhesive strength or extremely brittle electrodes. Accordingly, resolutions for such a problem regarding volume expansion described above are challenging to expect.

Therefore, a binder enabling secondary batteries to obtain a capacity retention rate by solving these problems is required.

### [Document of related art]

### [Patent Document]

(Patent Document 1) Korean Patent Application Publication No. 10-2016-0024921

### Disclosure

### Technical Problem

Accordingly, the present disclosure aims to provide a copolymer composition with excellent water solubility and dispersibility to improve the dispersion stability of a slurry composition.

Additionally, the present disclosure aims to provide a slurry composition with an excellent ability to prevent electrode expansion and binding strength, using the copolymer composition.

Furthermore, the present disclosure aims to provide an electrode (especially an anode) with improved performance, the electrode to which the slurry composition is applied, and a secondary battery with an excellent capacity retention rate per cycle, the secondary battery including the electrode.

However, the problems to be solved by the present disclosure are not limited to the above description, and other problems can be clearly understood by those skilled in the art from the following description.

### Technical Solution

In a first aspect of the present disclosure, a copolymer composition including a first copolymer including a vinyl alcohol monomer unit and a vinyl amine-based monomer unit,
and a second copolymer including a vinyl alcohol monomer unit and an acrylic acid salt-based monomer unit
is provided.

In a second aspect of the present disclosure, an anode slurry including the copolymer composition and
an anode active material
is provided

In a third aspect of the present disclosure, an anode including a current collector and
an anode active material layer formed on the current collector, the anode active material layer including the copolymer composition,
is provided.

In a fourth aspect of the present disclosure, a secondary battery
including the anode
is provided.

### Advantageous Effects

A copolymer composition of the present disclosure can have excellent flexibility, water solubility, and dispersibility, thus improving the dispersion stability of an anode slurry composition. Additionally, a secondary battery can have an improved capacity retention rate per cycle by increasing the binding strength to an anode current collector and preventing anode expansion.

### Best Mode

Hereinafter, the action and effect of the present disclosure will be described in detail through specific embodiments of the disclosure. However, these embodiments are provided only for illustrative purposes, and the scope of the present disclosure is not limited to the following embodiments.

All terms including technical and scientific terms used herein have the same meaning as commonly understood by those skilled in the art to which the present disclosure belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Therefore, the embodiments described herein are merely examples and do not exhaustively present the technical spirit of the present disclosure. Accordingly, it should be appreciated that there may be various equivalents and modifications that can replace the embodiments and the configurations at the time at which the present disclosure is filed.

As used herein, the singular forms are intended to include the plural forms as well, unless the context clearly indicates otherwise. It will be further understood that the terms "comprise", "include", "have", and the like when used herein, specify the presence of stated features, integers, steps, components, or combinations thereof but do not preclude the presence or addition of one or more other features, integers, steps, components, or combinations thereof.

As used herein to represent a specific numerical range, the expression "a to b" means "≥ a and ≤ b".

A copolymer composition, according to a first aspect of the present disclosure, may include a first copolymer including a vinyl alcohol monomer unit and a vinyl amine-based monomer unit, and a second copolymer including a vinyl alcohol monomer unit and an acrylic acid salt-based monomer unit.

In one embodiment, the first copolymer may further include any one or more selected from the group consisting of a vinyl acetate monomer unit and an N-vinylformamide-based monomer unit, and the second copolymer may further include any one or more selected from the group consisting of an acrylate-based monomer unit and a vinyl acetate monomer unit.

The first copolymer has a hydroxyl group and an amine group. Thus, when used as a binder for an anode slurry, the first copolymer may form a strong hydrogen bond with silicon, an anode active material, and may form a coordinate bond with an anode current collector, thereby improving the binding strength between silicon and the current collector.

On the other hand, the second copolymer is based on an ethylene skeletal structure, which may make the binder in the anode slurry flexible and prevent volume changes in silicon, the anode active material. Additionally, an alkali metal ion substituted at a terminal of the acrylic acid salt-based monomer unit may contribute to improving ionic conductivity. Furthermore, the stretched chain may interact with the anode active material to form a porous electrode with a dense structure and enable a stable solid-electrolyte interphase (SEI) layer to be formed.

The hydroxyl group of the first copolymer and the carboxyl group of the second copolymer may be chemically and/or physically crosslinked, thereby preventing volume changes in silicon, the anode active material.

In one embodiment, the vinyl amine-based monomer unit of the first copolymer may be any one or more selected from the group consisting of vinyl amine and 1-methylvinyl amine, but the present disclosure is not limited thereto.

Additionally, the acrylic acid salt-based monomer unit of the second copolymer may be any one or more selected from the group consisting of acrylic acid and methacrylic acid, but the present disclosure is not limited thereto.

In one embodiment, the N-vinylformamide-based monomer unit of the first copolymer may be any one or more selected from the group consisting of N-vinylformamide and N-isopropenylformamide, but the present disclosure is not limited thereto.

Additionally, the acrylate-based monomer unit of the second copolymer may be any one or more selected from the group consisting of methyl acrylate, methyl methacrylate, ethyl acrylate, ethyl methacrylate, propyl acrylate, propyl methacrylate, isopropyl acrylate, isopropyl methacrylate, butyl acrylate, butyl methacrylate, sec-butyl acrylate, sec-butyl methacrylate, tert-butyl acrylate, tert-butyl methacrylate, and ethylhexyl methacrylate, but the present disclosure is not limited thereto.

In one embodiment, based on 100 mol% of the total amount of the first copolymer, the vinyl alcohol monomer unit may be included in an amount of 50 mol% or more and 90 mol% or less, and the vinyl amine-based monomer unit may be included in an amount of 1 mol% or more and 50 mol% or less.

In one embodiment, based on 100 mol% of the total amount of the second copolymer, the vinyl alcohol monomer unit may be included in an amount of 1 mol% or more and 30 mol% or less, and the acrylic acid salt-based monomer unit may be included in an amount of 50 mol% or more and 90 mol% or less.

Each amount of the first and second copolymers may be adjusted by changing the degree of hydrolysis during the processes of preparing the first and second copolymers.

In one embodiment, the first copolymer may be represented by Formula 1 below, and the second copolymer may be represented by Formula 2 below.

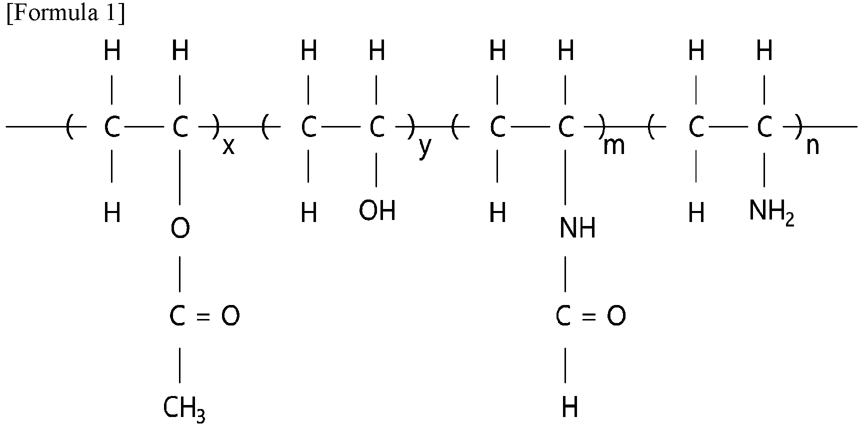

In Formula 1,
0 ≤ x ≤ 15 mol%, 50 ≤ y ≤ 90 mol%, 0 ≤ m ≤ 30 mol%, and 1 ≤ n ≤ 50 mol%.

In Formula 1, x, y, m, and n represent the mol% of each monomer unit.

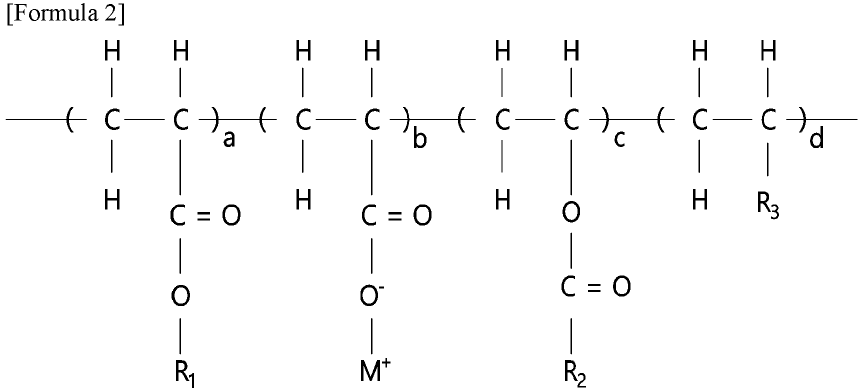

In Formula 2,
R₁ and R₂ are the same or different from each other and are each independently hydrogen or a straight-chain or branched-chain hydrocarbon having 1 to 5 carbon atoms,
R₃ is a hydroxyl (-OH) group,
M is an alkali metal,
0 ≤ a ≤ 5 mol%, 50 ≤ b ≤ 90 mol%, 0 ≤ c ≤ 5 mol%, and 1 ≤ d ≤ 30 mol%.

In Formula 2, a, b, c, and d represent the mol% of each monomer unit.

Additionally, M in Formula 2 may be any one selected from the group consisting of lithium (Li), potassium (K), and sodium (Na), but the present disclosure is not limited thereto.

On the other hand, R₁ and R₂ in Formula 2 may be each independently any one selected from the group consisting of hydrogen, methyl, ethyl, n-propyl, isopropyl, n-butyl, isobutyl, sec-butyl, tert-butyl and n-pentyl, but the present disclosure is not limited thereto.

In one embodiment, based on 100 mol% of the total weight of the copolymer composition, the first copolymer may be included in an amount of 10 wt% or more and 90 wt% or less, and the second copolymer may be included in an amount of 10 wt% or more and 90 wt% or less.

The higher the ratio of the first copolymer within the amount ranges of the first and second copolymers in the copolymer composition, the more improved the binding strength of the anode may be when used as a binder for the anode.

Additionally, the higher the ratio of the second copolymer within the amount ranges of the first and second copolymers in the copolymer composition, the more improved the dispersibility and stability of the anode slurry may be when used as the binder for the anode.

The greater the extent to which each amount of the first and second copolymers in the copolymer composition does not fall within the scope of the present disclosure, the more likely one or more of the dispersion stability of the anode slurry composition, the binding strength of the anode, and the properties of a secondary battery may deteriorate when used as the binder for the anode.

In particular, electrodes with low binding strength to the current collector may be delaminated during the drying and rolling processes, and separation of the electrode from a slurry applied thereon may occur when increasing the rolling density of the electrode. Additionally, during battery operation, low binding strength to the electrode plates may cause delamination of electrodes expanded through wet expansion in an electrolyte, leading to deterioration in the operational stability of the battery.

In one embodiment, the first copolymer may be a random or block copolymer, and the second copolymer may be a random or block copolymer.

In one embodiment, the first copolymer may have a number average molecular weight of 10,000 or greater and 1,000,000 or smaller, and the second copolymer may have a number average molecular weight of 10,000 or greater and 1,000,000 or smaller.

On the other hand, the first copolymer may be prepared by hydrolysis of a copolymer including the vinyl acetate monomer unit and the N-vinylformamide-based monomer unit.

In other words, the vinyl acetate monomer unit and the N-vinylformamide-based monomer unit of the first copolymer may be hydrolyzed to the vinyl alcohol monomer unit and the vinyl amine-based monomer unit, respectively.

Additionally, the second copolymer may be prepared by hydrolysis of a copolymer including the acrylate-based monomer unit and the vinyl acetate monomer unit.

In other words, the acrylate-based monomer unit and the vinyl acetate monomer unit of the second copolymer may be hydrolyzed to the acrylic acid salt-based monomer unit and the vinyl alcohol monomer unit, respectively.

An alkali metal hydroxide may be used in the hydrolysis for preparing the first and second copolymers, but the present disclosure is not limited thereto.

An anode slurry, according to a second aspect of the present disclosure, may include the copolymer composition and an anode active material.

In other words, the copolymer composition is usable as a binder for an anode.

A peel strength between a copper current collector and an anode active material layer formed using the anode slurry may be 4 dyne/cm² or more and 11 dyne/cm² or less.

The anode active material may be one selected from the group consisting of carbon-based materials, silicon, alkali metals, alkaline earth metals, elements of group 13, elements of group 14, transition metals, and rare-earth elements, or a compound containing one or more selected from the above group. Preferably, the anode active material is silicon or a silicon-containing compound.

Examples of such carbon-based materials may include artificial graphite, natural graphite, hard carbon, soft carbon, and the like, but the present disclosure is not limited thereto. The silicon-containing anode active material is not particularly limited in types as long as it is silicon or a silicon-containing compound. However, the silicon-containing anode active material is preferably one or more selected from the group consisting of Si, SiOₓ (where 0 < x < 2), Si-Y alloys (where Y is an alkali metal, alkaline earth metal, element of group 13, element of group 14, transition metal, rare-earth metal, or a combination thereof but not Si), and Si-C composites.

Additionally, when mixing the silicon-containing anode active material and other anode active materials for use as the anode active material, the silicon-containing anode active material may be included in an amount of 8 wt% or more of the total weight of the anode active material.

The anode active material may be included in an amount in the range of 50 to 90 wt% based on the total weight of the anode active material layer, which is preferably in the range of 60 to 80 wt%.

When the amount of the anode active material included is less than 50 wt%, the energy density may decrease, making it impossible to manufacture a battery with high energy density. When the amount of the anode active material included exceeds 90 wt%, the amounts of a conductive additive and the binder may decrease, leading to a decrease in electrical conductivity and a decrease in adhesive strength between the electrode active material layer and the current collector.

On the other hand, the copolymer composition, serving as the binder, of the present disclosure may be included in an amount in the range of 1 to 35 wt% based on the total weight of the anode slurry. When the amount of the copolymer is less than 1 wt%, the physical properties of the anode may deteriorate, eliminating the anode active material and the conductive additive. When the amount of the copolymer exceeds 35 wt%, the ratios of the anode active material and the conductive additive may be relatively reduced, leading to a decrease in battery capacity and a decrease in the electrical conductivity of the anode.

Additionally, the anode slurry may further contain polymers in addition to the copolymer composition of the present disclosure. Examples of such polymers may specifically include polyvinylidene fluoride (PVDF), polyvinyl alcohol (PVA), polyacrylic acid (PAA), polyacrylic acid metal salts (Metal-PAA), polymethacrylic acid (PMA), polymethyl methacrylate (PMMA), polyacrylamide (PAM), polymethacrylamide, polyacrylonitrile (PAN), polymethacrylonitrile, polyimide (PI), chitosan, starch, polyvinylpyrrolidone, tetrafluoroethylene, polyethylene, polypropylene, ethylene-propylene-diene polymers (EPDMs), sulfonated-EPDMs, styrene-butadiene rubber (SBR), fluoroelastomers, hydroxypropyl cellulose, regenerated cellulose, and various copolymers thereof, but the present disclosure is not limited thereto.

An anode, according to a third aspect of the present disclosure, may include a current collector and an anode active material layer formed on the current collector, the anode active material layer including the copolymer composition of the present disclosure.

The anode active material layer may further include a conductive additive. The conductive additive is used to further improve the conductivity of anode active materials. Any conductive additive being conductive without causing chemical changes in a battery of the present disclosure may be used without particular limitation. Examples of such a conductive additive used may include: graphite, such as natural graphite or artificial graphite; carbon black, such as carbon black, acetylene black, Ketjen black, channel black, furnace black, lamp black, or thermal black; conductive fibers, such as carbon fibers or metal fibers; metal powders, such as carbon fluoride, aluminum, or nickel powder; conductive whiskers, such as zinc oxide or potassium titanate; conductive metal oxides, such as titanium oxide; polyphenylene derivatives; and the like.

The conductive additive may be included in an amount in the range of 5 to 30 wt% based on the total weight of the anode active material layer, which is preferably in the range of 15 to 25 wt%. When the amount of the conductive additive included is less than 5 wt%, the electrical conductivity of the anode is reduced. When the amount of the conductive additive included exceeds 30 wt%, the ratios of the silicon-based anode active material and the binder may be relatively reduced, leading to a decrease in battery capacity. Additionally, the amount of the anode active material included decreases because the amount of the binder included needs to be increased to maintain the anode active material layer, making it impossible to manufacture a battery with high energy density.

In the anode of the present disclosure, the anode active material layer includes the copolymer composition of the present disclosure, thus preventing the volume expansion of the anode active material from occurring when charging and discharging secondary batteries, and improving a capacity retention rate per cycle.

The anode may be manufactured by the following steps: (a) preparing a composition for forming the anode active material layer including the anode active material and the copolymer composition of the present disclosure, and (b) applying the composition for forming the anode active material layer on an anode current collector and then drying the resulting product.

The composition for forming the anode active material layer is prepared in an anode slurry form. A solvent for preparing the slurry form is required to be easily dried and most preferably capable of well dissolving the copolymer composition, serving as the binder, of the present disclosure, but keeping the anode active material in a dispersed form while not being dissolved.

An organic solvent or water is usable as the solvent according to the present disclosure, and an organic solvent including one or more selected from the group consisting of methylpyrrolidone, dimethylformamide, isopropyl alcohol, acetonitrile, methanol, ethanol, and tetrahydrofuran may be applicable as the organic solvent.

The mixing of the composition for forming the anode active material layer may be performed in a known manner using existing mixers, for example, a paste mixer, a high-speed shear mixer, a homo-mixer, or the like.

Step (b) is a step of manufacturing the anode for a lithium secondary battery by applying the composition for forming the anode active material layer prepared in step (a) on the anode current collector and then drying the resulting product.

The anode current collector may be specifically selected from the group consisting of copper, stainless steel, titanium, silver, palladium, nickel, alloys thereof, and combinations thereof. The surface of the stainless steel may be treated with carbon, nickel, titanium, or silver, and an aluminum-cadmium alloy may be used as the alloy mentioned above. Additionally, sintered carbon, a non-conductive polymer whose surface is treated with a conductive additive, a conductive polymer, or the like may be used.

The composition for forming the anode active material layer prepared in step (a) is applied on the anode current collector. Depending on the desired thickness to be formed, the thickness of the composition with which the anode current collector is coated may be appropriately adjusted, which is preferably selected within the range of 10 to 300 µm.

In this case, the method of applying the composition for forming the slurry-form anode active material layer is not limited. For example, methods such as doctor blade coating, dip coating, gravure coating, slit die coating, spin coating, comma coating, bar coating, reverse roll coating, screen coating, and cap coating may be performed.

The resulting product is dried after applying the composition, thus ultimately manufacturing the anode for a secondary battery (especially the lithium secondary battery) in which the anode active material layer is formed.

A battery, according to a third aspect of the present disclosure, may include an anode including a current collector and the anode active material layer formed thereon.

The battery may be a secondary battery (especially a lithium secondary battery) including a cathode, the anode, a separator interposed between the cathode and the anode, and an electrolyte solution.

When 200 cycles of charging and discharging are repeatedly performed on the secondary battery, the capacity retention rate may be 80% or higher.

Additionally, when 200 cycles of charging and discharging are repeatedly performed on the secondary battery, the expansion rate of the electrode may be 60% or lower.

The configuration of the cathode, the separator, and the electrolyte solution of the lithium secondary battery is not particularly limited in the present disclosure and follows what is known in the related art.

The cathode includes a cathode active material formed on a cathode current collector.

Any cathode current collector being highly conductive while not causing chemical changes in the battery of the present disclosure may be used without particular limitation. Examples thereof used may include stainless steel, aluminum, nickel, titanium, sintered carbon, or aluminum or stainless steel whose surface is treated with carbon, nickel, titanium, silver, and the like. In this case, the cathode current collector may be used in various forms such as a sheet, foil, net, porous material, foam, non-woven fabric, or film with fine protrusions formed on the surface thereof to strengthen the bonding strength to the cathode active material.

Any cathode active materials usable in the art may be used as the cathode active material constituting the cathode active material layer. Examples of such cathode active materials may specifically include: lithium metal; lithium cobalt-based oxides, such as LiCoO₂; lithium manganese-based oxides, such as Li₁₊ₓMn₂₋ₓO₄ (where x is in the range of 0 to 0.33), LiMnO₃, LiMn₂O₃, and LiMnO₂; lithium copper oxides, such as Li₂CuO₂; vanadium oxides, such as LiVsOs, LiFe₃O₄, V₂O₅, and Cu₂V₂O₇; lithium nickel-based oxides represented by LiNi₁₋ₓMₓO₂ (where M is Co, Mn, Al, Cu, Fe, Mg, B, or Ga, and x is in the range of 0.01 to 0.3); lithium manganese composite oxides represented by LiMn₂₋ₓMₓO₂ (where M is Co, Ni, Fe, Cr, Zn, or Ta, and x is in the range of 0.01 to 0.1) or Li₂Mn₃MO₈ (where M is Fe, Co, Ni, Cu, or Zn); lithium-nickel-manganese-cobalt-based oxides represented by Li(NiₐCo_{b}Mn_{c})O2 (where 0 < a < 1, 0 < b < 1, 0 < c < 1, and a + b + c = 1); sulfur or disulfide compounds; phosphates, such as LiFePO₄, LiMnPO₄, LiCoPO₄, and LiNiPO₄; Fe₂(MoO₄)₃; and the like. However, the present disclosure is not limited thereto.

In this case, the cathode active material layer may further include a binder, a conductive additive, a filler, and other additives, in addition to the cathode active material, and the conductive additive is the same as that described above regarding the anode for the lithium secondary battery.

Additionally, examples of such a binder may include polyvinylidene fluoride (PVDF), polyvinyl alcohol (PVA), polyacrylic acid (PAA), polymethacrylic acid (PMA), polymethyl methacrylate (PMMA), polyacrylamide (PAM), polymethacrylamide, polyacrylonitrile (PAN), polymethacrylonitrile, polyimide (PI), chitosan, starch, hydroxypropyl cellulose, regenerated cellulose, polyvinylpyrrolidone, tetrafluoroethylene, polyethylene, polypropylene, ethylene-propylene-diene polymers (EPDMs), sulfonated-EPDMs, styrene-butadiene rubber (SBR), fluoroelastomers, and various copolymers thereof, but the present disclosure is not limited thereto.

The separator may be made of a porous substrate, and any porous substrate commonly used in electrochemical devices is usable. Examples thereof used may include a polyolefin-based porous membrane or non-woven fabric, but the present disclosure is not particularly limited thereto.

The separator may be a porous substrate made of any one or a mixture of two or more selected from the group consisting of polyethylene, polypropylene, polybutylene, polypentene, polyethylene terephthalate, polybutylene terephthalate, polyester, polyacetal, polyamide, polycarbonate, polyimide, polyetheretherketone, polyethersulfone, polyphenylene oxide, polyphenylene sulfide, and polyethylene naphthalate.

The electrolyte solution of the lithium secondary battery, a lithium-containing non-aqueous electrolyte solution, is composed of a lithium salt and a solvent. As the solvent, a non-aqueous organic solvent, an organic solid electrolyte, an inorganic solid electrolyte, and the like are used.

Examples of such a lithium salt, a material that is likely to be dissolved in the non-aqueous electrolyte solution, used may include LiCl, LiBr, LiI, LiClO₄, LiBF₄, LiB₁₀Cl₁₀, LiPF₆, LiAsF₆, LiSbF₆, LiAlCl₄, LiSCN, LiC₄BO₈, LiCF₃CO₂, LiCH₃SO₃, LiCF₃SO₃, LiN(SO₂CF₃)₂, LiN(SO₂F)₂, LiN(SO₂C₂F₅)₂, LiC₄F₉SO₃, LiC(CF₃SO₂)₃, (CF₃SO₂)·2NLi, lithium chloroborane, lithium lower aliphatic carboxylate, lithium tetraphenylborate, and the like.

Examples of such a non-aqueous organic solvent used may include aprotic organic solvents, such as N-methyl-2-pyrrolidone, propylene carbonate, ethylene carbonate, butylene carbonate, dimethyl carbonate, diethyl carbonate, ethyl methyl carbonate, gamma-butyrolactone, 1,2-dimethoxy ethane, 1,2-diethoxy ethane, tetrahydroxy franc, 2-methyl tetrahydrofuran, dimethyl sulfoxide, 1,3-dioxolane, 4-methyl-1,3-dioxene, diethyl ether, formamide, dimethylformamide, dioxolane, acetonitrile, nitromethane, methyl formate, methyl acetate, phosphate triester, trimethoxy methane, dioxolane derivatives, sulfolane, methyl sulfolane, 1,3-dimethyl-2-imidazolidinone, propylene carbonate derivatives, tetrahydrofuran derivatives, ether, methyl propionate, ethyl propionate, and the like.

Examples of such an organic solid electrolyte used may include polyethylene derivatives, polyethylene oxide derivatives, polypropylene oxide derivatives, phosphoric acid ester polymers, poly agitation lysine, polyester sulfides, polyvinyl alcohols, polyvinylidene fluorides, polymers having secondary dissociation groups, and the like.

Examples of such an inorganic solid electrolyte may include nitrides, halides, sulfates, and the like of Li, such as Li₃N, LiI, Li₅NI₂, Li₃N-LiI-LiOH, LiSiO₄, LiSiO₄-LiI-LiOH, Li₂SiS₃, Li₄SiO₄, Li₄SiO₄-LiI-LiOH, Li₃PO₄-Li₂S-SiS₂, and the like.

Additionally, the non-aqueous electrolyte solution may further include other additives to improve charge/discharge characteristics, flame retardancy, and the like. Examples of such additives may include pyridine, triethyl phosphite, triethanolamine, cyclic ether, ethylene diamine, n-glyme, hexaphosphate triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxyethanol, aluminum trichloride, fluoroethylene carbonate (FEC), propene sultone (PRS), vinylene carbonate (VC), and the like.

The lithium secondary battery, according to the present disclosure, may be subjected to folding and lamination stacking processes of the separator and the electrodes, in addition to a typical winding process. Additionally, a case of the battery may be a cylinder type, prism type, pouch type, or coin type.

### Mode for Invention

Hereinafter, the present disclosure will be described in more detail using examples, but the present disclosure is not limited thereto.

### [Preparation Example 1] Preparation of first copolymer

Vinyl acetate and N-vinylformamide were continuously supplied to a reactor into which nitrogen was blown and then allowed to react at 60°C to synthesize a copolymer (PVAc-co-PVNF) of vinyl acetate and vinylformamide.

A mixture containing such synthesized PVAc-co-PVNF was recovered and introduced into methanol in which KOH was dissolved to hydrolyze the acetate functional group of PVAc-co-PVNF, thereby obtaining a copolymer (PVOH-co -PVNF) of vinyl alcohol and N-vinylformamide in a swollen gel form.

The obtained gel was crushed into fine particles, washed with methanol, introduced into methanol in which an alkaline catalyst was dissolved, further hydrolyzed, and washed to remove soluble salts and by-products, thereby obtaining a first copolymer (PVOH-co-PVAm) of vinyl alcohol and vinyl amine.

### [Preparation Example 2] Preparation of second copolymer

To a reactor, 1,050 g of distilled water and 10 g of alkyldiphenyloxide disulfonate were added, followed by stirring the resulting mixture for 1 hour while nitrogen was blown thereinto.

Then, 2.5 g of potassium persulfate was added, and the reactor was heated to 60°C. Next, 110 g of vinyl acetate and 330 g of ethyl acrylate were added dropwise for 3 hours, and the same temperature was maintained for 2 hours to terminate the reaction, thereby obtaining a vinyl acetate-ethyl acrylate copolymer with 30 wt% of solid content.

Hydroxide, 100 g of the vinyl acetate-ethyl acrylate copolymer with 30 wt% of solid content, 150 g of ethanol, and an organic salt were added to the reactor, followed by stirring the resulting mixture at 60°C for 4 hours while performing hydrolysis.

After completion of hydrolysis, the precipitated hydrolysate was dissolved in distilled water, heated to 80°C, stirred for 8 hours, and stripped, thereby preparing a second copolymer.

### [Preparation Example 3] Manufacture of lithium secondary battery

Distilled water, 88 g of artificial graphite serving as an electrode active material, 8 g of SiOx, 1 g of carbon nanotubes, and 3 g of a binder including the first copolymer prepared by Preparation Example 1 and/or the second copolymer prepared by Preparation Example 2 were mixed, thereby preparing an anode slurry.

Such a prepared anode slurry was evenly applied on a copper current collector and then dried at 110°C. The resulting compound was rolled and then subjected to heat treatment in a vacuum oven at 110°C for 4 or more hours, thereby manufacturing an anode.

Then, a non-aqueous electrolyte solution containing a lithium salt was used as an electrolyte, and a polyolefin separator was interposed between a cathode and the anode, thereby manufacturing a lithium secondary battery without distinguishing the form into a pouch or coin cell type.

As the non-aqueous electrolyte, a LiPF₆ electrolyte dissolved at a concentration of 1 M in a solvent in which ethylene carbonate, ethyl methyl carbonate, and diethyl carbonate were mixed in a 3:5:2 volume ratio was used.

### [Example 1]

A lithium secondary battery was manufactured according to Example 3 using a binder in which the first copolymer prepared by Preparation Example 1 and the second copolymer prepared by Preparation Example 2 were mixed in a 50:50 weight ratio (wt% of the first copolymer:wt% of the second copolymer).

### [Example 2]

A lithium secondary battery was manufactured in the same manner as in Example 1, except that the weight ratio of the first copolymer to the second copolymer (wt% of the first copolymer:wt% of the second copolymer) was 30:70.

### [Example 3]

A lithium secondary battery was manufactured in the same manner as in Example 1, except that the weight ratio of the first copolymer to the second copolymer (wt% of the first copolymer:wt% of the second copolymer) was 20:80.

### [Example 4]

A lithium secondary battery was manufactured in the same manner as in Example 1, except that the weight ratio of the first copolymer to the second copolymer (wt% of the first copolymer:wt% of the second copolymer) was 70:30.

### [Example 5]

A lithium secondary battery was manufactured in the same manner as in Example 1, except that the weight ratio of the first copolymer to the second copolymer (wt% of the first copolymer:wt% of the second copolymer) was 80:20.

### [Comparative Example 1]

A lithium secondary battery was manufactured in the same manner as in Example 1, except for using the first copolymer alone as the binder (second copolymerfree binder).

### [Comparative Example 2]

A lithium secondary battery was manufactured in the same manner as in Example 1, except for using the second copolymer alone as the binder (first copolymerfree binder).

### [Comparative Example 3]

A lithium secondary battery was manufactured in the same manner as in Example 1, except that the weight ratio of styrene-butadiene rubber (SBR) to carboxymethyl cellulose (CMC) (wt% of SBR:wt% of CMC) was 45:55.

### [Evaluation Example 1] Stability evaluation of anode slurry

The stability of the anode slurries of Examples 1 to 5 and Comparative Example 1 was measured at room temperature using a grind gauge.

As a result of the measurement, the anode slurries of Examples 1 to 5, using the binders in which the first and second copolymers were mixed in the predetermined ratios, were measured to have a particle size of 25 µm or larger. In contrast, the anode slurry of Comparative Example 1, using the first copolymer alone as the binder, was measured to have a particle size of 35 µm or larger.

In other words, the particle size of the anode slurries of Examples 1 to 5 is smaller than that of the anode slurry of Comparative Example 1, confirming that the dispersibility and stability of the anode slurries of Examples 1 to 5 were more improved than those of the anode slurry of Comparative Example 1.

On the other hand, the anode slurry of Comparative Example 2, using the second copolymer alone as the binder, was measured to have a particle size of 20 µm or larger.

### [Evaluation Example 2] Binding strength evaluation of binder

To measure the binding strength based on each binder used in Examples 1 to 5 and Comparative Examples 1 to 3, the copper current collector of the manufactured anode and the anode slurry layer formed on the copper current collector were peeled off at 180°, thereby measuring the binding strength.

### [Evaluation Example 3] Battery performance evaluation

Two cycles of charging and discharging were performed on the lithium secondary batteries manufactured in Examples 1 to 5 and Comparative Examples 1 to 3 at 25°C at a charge/discharge current density of 0.1 C, a charge cut-off voltage level of 4.8 V, and a discharge cut-off voltage level of 2.7 V.

Then, the capacity retention rate was measured by performing 200 cycles of charging and discharging at a charge/discharge current density of 1 C, a charge cut-off voltage level of 4.8 V, and a discharge cut-off voltage level of 2.7 V.

The discharging was all performed under constant current/constant voltage conditions, and the discharge cut-off current level of constant voltage was set to 0.005 C.

In this case, the capacity retention rate was calculated according to Equation 1 below.

Capacity retention rate (%) = (discharge capacity after 200 cycles/discharge capacity after 3 cycles) * 100

Additionally, after the completion of charge and discharge evaluation, the cell was disassembled to check thickness changes in each anode, thereby comparing the effect of the binders used in Examples 1 to 5 and Comparative Examples 1 to 3 in preventing silicon expansion.

In this case, the thickness change rate was calculated according to Equation 2 below.

Expansion rate of electrode (%) = (thickness of anode after 200 cycles - thickness of vacuum-dried anode before assembled)/thickness of vacuum-dried anode before assembled * 100

The capacity retention rate of the battery, the expansion rate of the electrode, and the binding strength based on the binder, measured in Evaluation Examples 2 and 3, are shown in Table 1 below.

**[Table 1]**

| | Binding strength (dyne/cm²) | Capacity retention rate after 200 cycles (%) | Expansion rate of electrode after 200 cycles (%) |
|---|---|---|---|
| Example 1 | 8.7 | 91 | 40 |
| Example 2 | 5.5 | 85 | 38 |
| Example 3 | 4.0 | 83 | 34 |
| Example 4 | 10.0 | 90 | 52 |
| Example 5 | 11.0 | 87 | 55 |
| Comparative Example 1 | 12 | 77 | 63 |
| Comparative Example 2 | 3 | 60 | 32 |
| Comparative Example 3 | 9 | 89 | 120 |

As shown in Table 1, it was confirmed that in the case of Examples 1 to 5, using the binders in which the first and second copolymers were mixed in the predetermined ratios, the binding strength was better than that in the case of Comparative Example 2, using the second copolymer alone as the binder.

Additionally, when mixing the first and second copolymers for use as the binder, it was seen that the higher the ratio of the first copolymer mixed, the more improved the binding strength was.

On the other hand, it was confirmed that in the case of Examples 1 to 5, using the binders in which the first and second copolymers were mixed in the predetermined ratios, the capacity retention rate of the lithium secondary batteries was 80% or higher after 200 cycles.

In contrast, in the case of Comparative Examples 1 or 2, using the first or second copolymer alone as the binder, the capacity retention rate of the lithium secondary batteries was reduced.

In terms of the expansion rate of the electrode in the lithium secondary batteries after 200 cycles, it was confirmed that in the case of Examples 1 to 5, using the binders in which the first and second copolymers were mixed in the predetermined ratios, the expansion rate of the electrode was prevented to 55% or lower.

In contrast, it was confirmed that in the case of Comparative Example 1, using the first copolymer alone as the binder, or Comparative Example 3, using the mixture of existing binder polymers as the binder, the expansion rate of the electrode was relatively high.

The high expansion rate of the electrode may shorten the cycle life of lithium secondary batteries and lead to serious failures such as ignition.

In other words, in the case of using the first copolymer alone as the binder, the binding strength may be higher than that in the case of using the binders in which the first and second copolymers are mixed in the predetermined ratios. However, the capacity retention rate of the lithium secondary battery may be reduced, and the expansion rate of the electrode may be high. Accordingly, battery properties may deteriorate.

Additionally, in the case of using the second copolymer alone as the binder, the characteristics to prevent the expansion rate of the electrode may be more improved than those in the case of using the binders in which the first and second copolymers are mixed in the predetermined ratios. However, the binding strength and the capacity retention rate of the lithium secondary battery may be reduced. Accordingly, battery properties may deteriorate.

As a result, it was confirmed that the copolymer binder compositions of the present disclosure, in which the first and second copolymers were mixed in the predetermined ratios, had the dispersion stability of the anode slurry composition, the binding strength of the anode, and the properties of the secondary battery within appropriate ranges.

On the other hand, it was seen that when using the first or second copolymer alone or the existing polymers as the binder, one or more of the dispersion stability of the anode slurry composition, the binding strength of the anode, and the properties of the secondary battery were inappropriate for use in actual secondary batteries.

The scope of the present disclosure is defined by the appended claims rather than the detailed description presented above. All changes or modifications derived from the meaning and scope of the claims and the concept of equivalents should be construed to fall within the scope of the present disclosure.

### Industrial Applicability

A copolymer composition of the present disclosure may have excellent flexibility, water solubility, and dispersibility, thus improving the dispersion stability of an anode slurry composition. Additionally, a secondary battery may have an improved capacity retention rate per cycle by increasing the binding strength to an anode current collector and preventing anode expansion.

## Claims

1. A copolymer composition comprising:
a first copolymer comprising a vinyl alcohol monomer unit and a vinyl amine-based monomer unit; and
a second copolymer comprising a vinyl alcohol monomer unit and an acrylic acid salt-based monomer unit.

2. The copolymer composition of claim 1, wherein the first copolymer further comprises any one or more selected from the group consisting of a vinyl acetate monomer unit and an N-vinylformamide-based monomer unit, and
the second copolymer further comprises any one or more selected from the group consisting of an acrylate-based monomer unit and a vinyl acetate monomer unit.

3. The copolymer composition of claim 1, wherein the vinyl amine-based monomer unit is any one or more selected from the group consisting of vinyl amine and 1-methylvinyl amine, and
the acrylic acid salt-based monomer unit is any one or more selected from the group consisting of acrylic acid and methacrylic acid.

4. The copolymer composition of claim 2, wherein the N-vinylformamide-based monomer unit is any one or more selected from the group consisting of N-vinylformamide and N-isopropenylformamide, and
the acrylate-based monomer unit is any one or more selected from the group consisting of methyl acrylate, methyl methacrylate, ethyl acrylate, ethyl methacrylate, propyl acrylate, propyl methacrylate, isopropyl acrylate, isopropyl methacrylate, butyl acrylate, butyl methacrylate, sec-butyl acrylate, sec-butyl methacrylate, tert-butyl acrylate, tert-butyl methacrylate, and ethylhexyl methacrylate.

5. The copolymer composition of claim 1, wherein the vinyl alcohol monomer unit is included in an amount of 50 mol% or more and 90 mol% or less, and the vinyl amine-based monomer unit is included in an amount of 1 mol% or more and 50 mol% or less, based on 100 mol% of the total amount of the first copolymer.

6. The copolymer composition of claim 1, wherein the vinyl alcohol monomer unit is included in an amount of 1 mol% or more and 30 mol% or less, and the acrylic acid salt-based monomer unit is included in an amount of 50 mol% or more and 90 mol% or less, based on 100 mol% of the total amount of the second copolymer.

7. The copolymer composition of claim 1, wherein the first copolymer is represented by Formula 1, and
the second copolymer is represented by Formula 2, 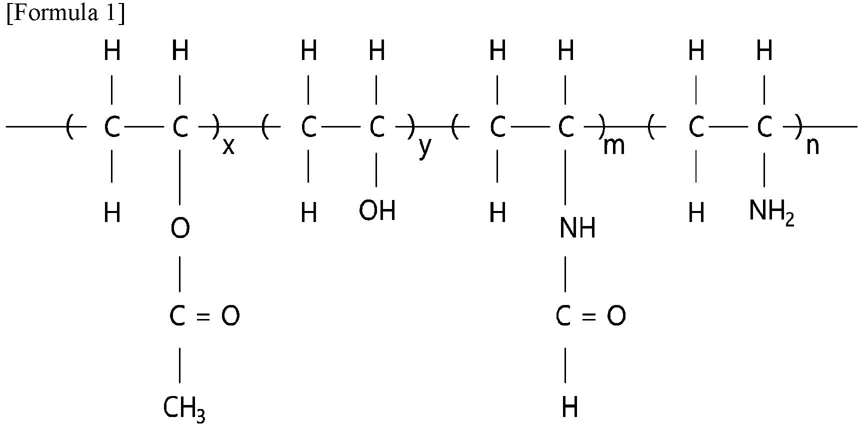
where in Formula 1,
0 ≤ x ≤ 15 mol%, 50 ≤ y ≤ 90 mol%, 0 ≤ m ≤ 30 mol%, and 1 ≤ n ≤ 50 mol%, and 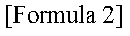 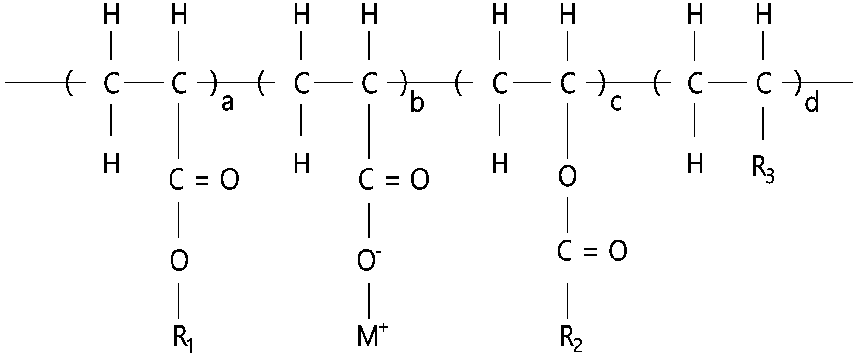
where in Formula 2,
R₁ and R₂ are the same or different from each other and are each independently hydrogen or a straight-chain or branched-chain hydrocarbon having 1 to 5 carbon atoms,
R₃ is a hydroxyl (-OH) group,
M is an alkali metal,
0 ≤ a ≤ 5 mol%, 50 ≤ b ≤ 90 mol%, 0 ≤ c ≤ 5 mol%, and 1 ≤ d ≤ 30 mol%.

8. The copolymer composition of claim 1, wherein the first copolymer is included in an amount of 10 wt% or more and 90 wt% or less, and the second copolymer is included in an amount of 10 wt% or more and 90 wt% or less, based on 100 mol% of the total weight of the copolymer composition.

9. The copolymer composition of claim 1, wherein the first copolymer is a random or block copolymer, and
the second copolymer is a random or block copolymer.

10. The copolymer composition of claim 1, wherein the first copolymer has a number average molecular weight of 10,000 or greater and 1,000,000 or smaller, and
the second copolymer has a number average molecular weight of 10,000 or greater and 1,000,000 or smaller.

11. An anode slurry comprising:
the copolymer composition of any one of claims 1 to 10; and
an anode active material.

12. An anode comprising:
a current collector; and
an anode active material layer formed on the current collector, the anode active material layer comprising the copolymer composition of any one of claims 1 to 10.

13. A secondary battery comprising the anode of claim 12.
